# EUROPEAN PATENT SPECIFICATION

(11) **EP 3 287 201 B1**
(45) Date of publication and mention of the grant of the patent: **20.04.2022**
(21) Application number: 17186261.8
(22) Date of filing: 15.08.2017
(51) Int. Cl.: B08B 9/043, B08B 9/045, B23B 29/034

(54) **PIPE CLEANING DEVICE**
ROHRREINIGUNGSVORRICHTUNG
DISPOSITIF DE NETTOYAGE DE TUYAU

(30) Priority: 26.08.2016 FI 20165641
(43) Date of publication of application: 28.02.2018
(73) Proprietor: Picote Solutions Inc., Sammamish, WA 98075 (US)
(72) Inventor: LOKKINEN, Mika, 10130 Tallinn (EE)
(74) Representative: Wilenius, Jami Juhani

(56) References cited:
- WO-A1-95/24980
- GB-A- 842 332
- GB-A- 190 919 259

## Description

### FIELD OF THE INVENTION

The present invention relates to a cleaning device, and particularly to a cleaning device for removing material inside a pipe.

### BACKGROUND OF THE INVENTION

Installed pipelines in buildings and underground can be rehabilitated without opening structures or digging the ground. The trenchless rehabilitation allows a quick and durable rehabilitation of pipes within buildings and underground pipelines. An old pipe is first cleaned thoroughly by removing any residues, rust and roots that have penetrated into the pipe. A resin impregnated liner is installed in the cleaned pipe with an inversion drum using air pressure to invert the liner into the pipe. Once the liner is installed air pressure is maintained on an elevated level until the resin within the liner settles and the liner forms a rigid pipe against the inner surface of the old pipe. A drop in air pressure inside the pipe during a settling period may cause collapse of the liner which blocks or at least severely restricts the flow of fluids in the pipe. Once the collapsed liner has settled inside the pipe it can only be removed by mechanically sanding or grinding the collapsed liner into small fragments which can then be removed from the pipe.

One of the problems associated with the above arrangement is that initial cleaning of the pipe is difficult if the pipe has cracks or holes into which cleaning tools get stuck. Another problem is that removing a collapsed liner needs special tools and it is tedious and hard work which may take several weeks to finish for a long pipe and it causes significant delays and additional expenses to a rehabilitation project.

GB19259 discloses a cutter-head with pivoted longitudinal cutters for pipe cleaning machines.

GB842332 discloses tools for abrasive treatment of pipes. The device comprises pivoting abrasive discs.

WO9524980 discloses a device for removing projecting objects inside a pipe. The device comprises pivotable cutting tools.

### BRIEF DESCRIPTION OF THE INVENTION

An object of the present invention is to provide a cleaning device which significantly speeds up the removal of a collapsed liner and other blockages from a pipe. Another object of the present invention is to provide a cleaning device which can be used also in damaged pipes.

The present invention is based on the idea of providing pivotally connected cutters on a body that can be rotated so that the cutters open towards inner wall of a pipe and the device automatically adapts to various diameters of the pipe.

An advantage of the arrangement of the present invention is that the device rigid but pivotally connected cutters so the device adjusts to changes in diameter and other irregularities inside a pipe. Long and curved shape of the cutters and relatively high rotating mass of the device makes it efficient in cleaning and insensitive to cracks and holes in the pipe.

### BRIEF DESCRIPTION OF THE DRAWINGS

In the following the present invention is described in greater detail by means of preferred embodiments with reference to the accompanying drawings, in which
Figure 1 shows a forward side view of a cleaning device according to an embodiment of the present invention;
Figure 2 illustrates a front side of a cleaning device according to an embodiment of the present invention;
Figure 3 illustrates a back side of a cleaning device according to an embodiment of the present invention;
Figure 4 shows a side view of a cleaning device according to an embodiment of the present invention;
Figure 5 shows a forward side view of a cleaning device according to an embodiment of the present invention.

### DETAILED DESCRIPTION OF THE INVENTION

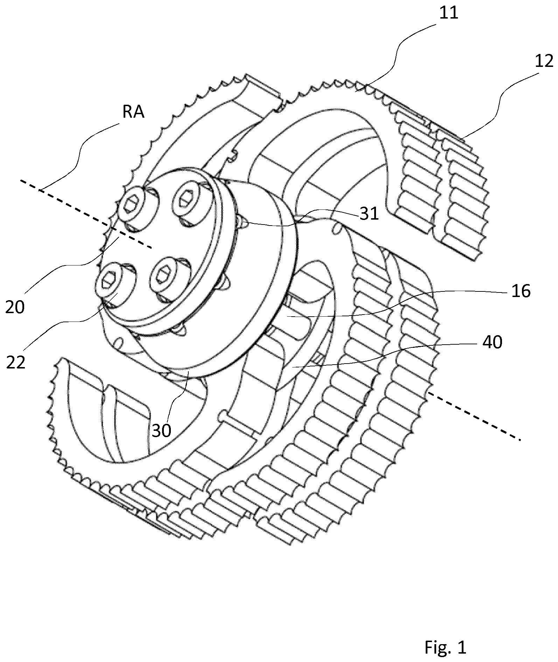

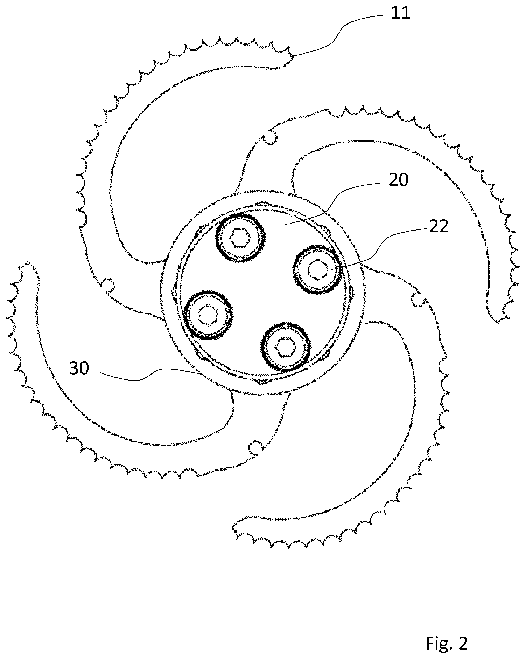

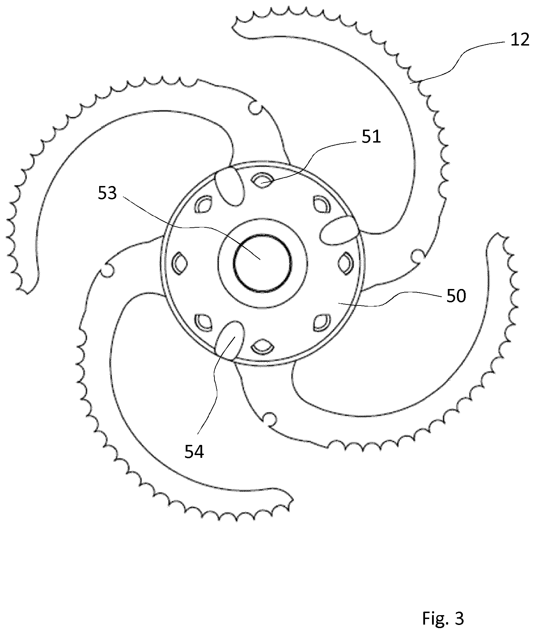

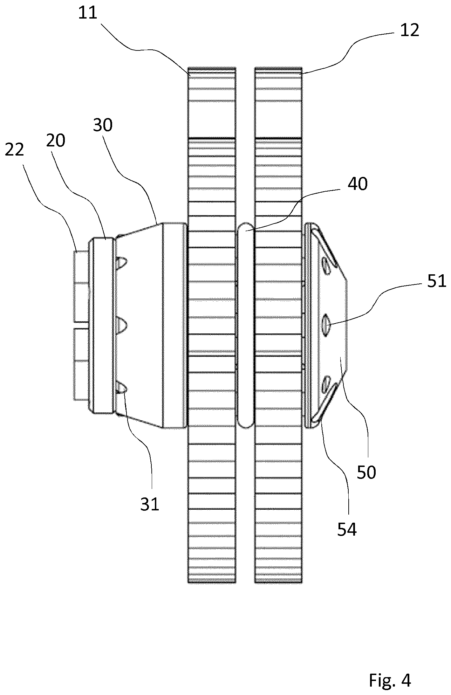

Figure 1 shows a forward side view of a cleaning device according to an embodiment of the present invention. Figures 2, 3 and 4 illustrate front, back and side views, respectively. The cleaning device can be used in pipe rehabilitation work to clean the pipes and to remove unwanted material, especially a collapsed liner, from the pipes.

The cleaning device comprises a body having a front body member 30 and a back body member 50 that has a connector 53, 54 for a drive shaft. The front body member 30 has apertures 31 or recesses defined therein and the back body member 50 has apertures 51 or recesses defined therein. Pins 16 are accommodated in said apertures or recesses of the front body member and back body member. The pins 16 extend between the front body member and back body member. The pins have preferably a circular cross-section. The body is preferably made of a metal, such as aluminium, iron or steel. The body may comprise multiple parts fixed together e.g. with screws 22 and/or bolts and nuts. The connector 53, 54 is preferably a socket 53 that has a slightly larger diameter than the drive shaft. Preferably, two or more threaded apertures 54 are provided on the side of the socket for accommodating tightening screws. Also a quick lock connector can be used. The connector is provided on a reverse side of the back body member of the cleaning device so that the cleaning device can be pushed forward in a pipe by pushing the drive shaft into the pipe. An end of the drive shaft is inserted into the socket and the drive shaft is secured to the connector by tightening the tightening screws against the drive shaft. The drive shaft is preferably made of a steel cable or similar flexible drive shaft that has some flexibility to be able to bend through bends of a pipeline.

Once the drive shaft is secured to the connector 53, 54, the cleaning device can be operated by rotating the drive shaft. The rotation of the drive shaft rotates the body of the cleaning device around a rotation axis RA illustrated in Figure 1. A powerful electric motor or a hydraulic motor can be used for rotating the drive shaft. Depending on the diameter of the cleaning device, electric motors that have an output of 2 to 10 kW and operating in a range of 500 to 2,500 rpm can be used with cleaning devices that have a diameter from about 50 mm to about 300 mm. It is understood that the diameter may be less than 50 mm and more than 300 mm also.

The cleaning device comprises a first set of grinding cutters 11 pivotally attached to the pins 16 of the body. The cutters have an aperture defined therein and extending through the cutters for accommodating the pins 16 for allowing pivotal movement of the cutters. The pivotal connection allows movement of a cutter in a plane perpendicular to the rotation axis RA. The cutters can therefore turn to increase or decrease diameter of the cleaning device. The cutters have cutting edges on their long outer surface from the rotation axis RA. Said cutting edges are parallel to the rotation axis to prevent causing a pushing force or a pulling force on the device while rotating. Said cutting edges are provided on the cutter surface by cutting oval arcs, circular arcs, quadratic notches or other recesses on the surface of the cutter. Also pieces of metal, preferably hard metal, can be fixed to the cutter for providing cutting edges. The cutters have preferably a curved shaped and the cutting edges are provided on a convex surface whereas the opposing concave surface faces towards the body of the cleaning device. The curved shape of the cutters provides better adaptation to changing diameter of a pipe and also divides the cleaning action to a larger number of cutting edges.

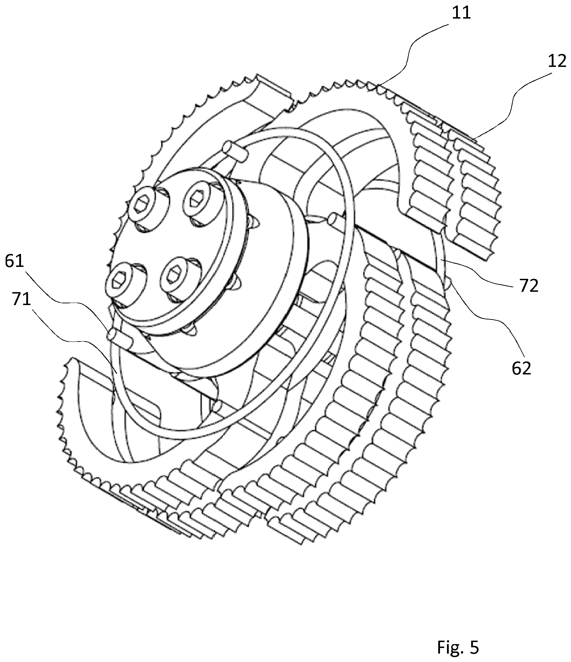

The cutters clean and remove material inside a pipe from sides of the cleaning device as the cutting edges are on the perimeter of the cleaning device. The cutters turn away from the body when the body is rotated and diameter of the cleaning device increases until the cutters face an obstacle or the inner surface of the pipe. At that point cutting edges come into contact with the obstacle or the inner surface of the pipe and scrape or grind the obstacle and/or surface thereby cleaning the pipe. When the rotation is stopped, decelerating rotary motion turns the cutters against the body and this way the cleaning device can be fitted though smaller holes or into smaller cavities. Figure 5 shows a forward side view of a cleaning device according to an embodiment wherein said turning of cutters against the body is facilitated with elastic force. In the embodiment of Fig. 5, a guide pin 61, 62 is provided on each cutter. Elastic bands 71, 72 are strapped around the guide pins 61, 62 in such a way that one elastic band surrounds guide pins of all the cutters of a set of cutters. The elastic band stretches when the cleaning device rotates with high enough speed and cutters turn away from the body. When the rotation is stopped, the elastic band contracts and turns the cutters towards the body. In an embodiment, the pivotally connected cutters are arranged to change diameter of the cleaning device by at least 20%, 25% or 30% between extreme positions of pivotal motion of the pivotally connected cutters. For example, the cleaning device can fit through a hole having diameter of 125 mm when the cutters are against the body but the same cleaning device can clean a pipe having diameter of 225 mm when the cleaning device is rotated and the cutters have fully turned away from the body.

In an embodiment the cleaning device comprises a second set of cutters 12 and a spacer 40 provided between cutters of the first set of cutters and the second set of cutters. The spacer is preferably disc-shaped and the spacer 40 has apertures defined therein for accommodating the pins 16. The spacer defines a gap between the first set of cutters 11 and the second set of cutters 12 thereby allowing cutters to move individually and preventing the cutters of the first set of cutters and the cutters of the second set of cutters from hitting each other. The second set of cutters stabilizes the cleaning device and helps in maintaining the rotation axis of the cleaning device in same direction as the pipe. The second set of cutters also increases the surface area that is being cleaned at a time.

In an embodiment the second set of cutters 12 consists of larger or smaller cutters than the first set of cutters 11. Smaller cutters near the front body member facilitate entering into a smaller cavity and the smaller cutters can enlarge the cavity so that the larger cutters near the back body member can enter the cavity and remove and remaining material in that particular section of the pipe. In an embodiment the cleaning device comprises multiple sets of cutters having spacers provided between each set of cutters. The size of the cutters between the sets of cutters remains the same or increases between each subsequent set of cutters in a direction from the front body member towards the back body member. This way entering into small cavities is facilitated and/or the surface area that is being cleaned at a time increases.

In an embodiment, the cleaning device has apertures 31 defined in the front body member 30 extending through the front body member 30 thereby allowing removal of the pins 16 and the cutters 11. The cleaning device further comprises a removable front plate 20 attached to the front body member 30, e.g. with screws or bolts. The front plate at least partially covering said apertures 31 for securing the pins 16. The cutters can be changed by removing the front plate 20 and removing the pins 16 and thereby releasing the cutters. New cutters can be placed in and the pins are inserted through the apertures of the front body member and through the apertures of the cutters into the apertures or recesses of the back body member and then attaching the front plate back onto the front body member for locking the pins in again.

In an embodiment the front plate 20 can be substituted with a cutting panel, grinding panel or sanding panel for removing material from a pipe when the cleaning device is pushed forward in the pipe. Said panel preferably removes material and defines a cavity in which the first set of cutters can be inserted for widening the cavity with the cutters and ultimately cleaning the pipe. Said panel can also be attached to the tool in addition to the front panel 20.

In an embodiment, the cleaning device comprises a centering device for centering the cleaning device within a pipe. In an embodiment, a set of cutters 11, 12 can be a centering device. In an embodiment the centering device comprises a body having stiff brushes radially extending from the body for centering the cleaning device within the pipe. The body of the centering device preferably surrounds the body of the cleaning device or the shaft. The body of the centering device preferably comprises bearings for eliminating or decreasing transmission of rotary motion of the shaft or the body of the cleaning device to the centering device to prevent wearing of the brushes. The brushes point radially out from the body of the centering device and the brushes are preferably configured to reach the inner surface of the pipe around the pipe. Thus the diameter of the centering device is equal or close to equal to the diameter of the pipe. The centering device can be located along the rotational axis of the cleaning device in front and/or behind the front body member and/or back body member. In an embodiment the centering device is located along the rotational axis of the cleaning device on both sides of a set of cutters. The present invention and its embodiments are not limited to the examples described above but may vary within the scope of the claims.

## Claims

1. A cleaning device for cleaning a pipe from the inside, the cleaning device comprising:
a front body member (30) having apertures (31) defined therein for accommodating a first end of pins (16);
a back body member (50) having apertures (51) defined therein for accommodating a second end of pins (16), and having a connector (53, 54) for connecting a drive shaft and being rotatable about a rotation axis with the drive shaft;
pins (16) extending from the first body member (30) to the second body member (50) in a direction parallel to the rotation axis;
a first set of cutters (11) having cutting edges provided on the cutters and each cutter having an aperture defined therein and extending through the cutter for accommodating one pin (16) between the first ends and the second ends,
said cutters are rigid and pivotally connected to said pins (16) allowing said cutters to pivot in a plane perpendicular to the rotation axis
**characterized in that** the cutters (11) have a curved shape with a convex surface and an opposing concave surface facing towards the body (30, 50) of the cleaning device, wherein the cutting edges are provided on the convex surface and said cutting edges are parallel to the rotation axis of the cleaning device.

2. The cleaning device of claim 1, **characterized in that** the apertures (31) defined in the front body member extend through the front body member (30) allowing removal of the pins (16) and the cutters (11) and the cleaning device comprises a removable front plate (20) attached to the front body member (30) at least partially covering said apertures (31) for securing the pins (16).

3. The cleaning device of claim 1, **characterized in that** the cleaning device comprises a second set of cutters (12) and a spacer (40) provided between cutters of the first set of cutters and the second set of cutters, and the spacer (40) having apertures defined therein for accommodating the pins (16).

4. The cleaning device of claim 3, **characterized in that** the second set of cutters (12) consists of larger or smaller cutters than the first set of cutters (11).

5. The cleaning device of claim 3, **characterized in that** the cleaning device comprises multiple sets of cutters having spacers provided between each set of cutters, wherein the size of the cutters between the sets of cutters remains the same or increases between each subsequent set of cutters in a direction from the front body member towards the back body member.

6. The cleaning device of claim 1, **characterized in that** the cleaning device comprises a centering device for centering the cleaning device within a pipe.

7. The cleaning device of claim 6, **characterized in that** the centering device comprises a body having stiff brushes radially extending from the body.

8. The cleaning device of claim 1, **characterized in that** the pivotally connected cutters are arranged to change diameter of the cleaning device by at least 25% between extreme positions of pivotal motion of the pivotally connected cutters.

## Patentansprüche

1. Reinigungsvorrichtung zum Reinigen eines Rohrs von innen, wobei die Reinigungsvorrichtung umfasst:
ein vorderes Körperelement (30), das darin definierte Öffnungen (31) zum Unterbringen eines ersten Endes von Stiften (16) aufweist;
ein hinteres Körperelement (50), das darin definierte Öffnungen (51) zum Unterbringen eines zweiten Endes von Stiften (16) aufweist, und ein Verbindungsstück (53, 54) zum Verbinden einer Antriebswelle aufweist, und mit der Antriebswelle um eine Drehachse herum drehbar ist;
Stifte (16), die sich von dem ersten Körperelement (30) bis zu dem zweiten Körperelement (50) in einer Richtung parallel zur Drehachse erstrecken;
einen ersten Satz von Schneidvorrichtungen (11), die Schneidkanten aufweisen, die an den Schneidvorrichtungen bereitgestellt werden, und wobei jede Schneidvorrichtung eine darin definierte und sich durch die Schneidvorrichtung erstreckende Öffnung zum Unterbringen eines Stifts (16) zwischen den ersten Enden und den zweiten Enden aufweist,
wobei die Schneidvorrichtungen starr sind und schwenkbar mit den Stiften (16) verbunden sind, so dass die Schneidvorrichtungen in einer Ebene rechtwinklig zur Drehachse schwenken können,
**dadurch gekennzeichnet, dass** die Schneidvorrichtungen (11) eine gekrümmte Form mit einer konvexen Oberfläche und einer gegenüberliegenden konkaven Oberfläche, die dem Körper (30, 50) der Reinigungsvorrichtung zugewandt ist, aufweisen, wobei die Schneidkanten auf der konvexen Oberfläche bereitgestellt werden und die Schneidkanten zur Drehachse der Reinigungsvorrichtung parallel sind.

2. Reinigungsvorrichtung nach Anspruch 1, **dadurch gekennzeichnet, dass** sich die Öffnungen (31), die in dem vorderen Körperelement definiert sind, durch das vordere Körperelement (30) hindurch erstrecken, so dass das Abnehmen der Stifte (16) und der Schneidvorrichtungen (11) ermöglicht wird, und die Reinigungsvorrichtung eine abnehmbare vordere Platte (20) umfasst, die an dem vorderen Körperelement (30) angebracht ist und die Öffnungen (31) zum Sichern der Stifte (16) mindestens teilweise abdeckt.

3. Reinigungsvorrichtung nach Anspruch 1, **dadurch gekennzeichnet, dass** die Reinigungsvorrichtung einen zweiten Satz von Schneidvorrichtungen (12) und einen Abstandshalter (40) umfasst, der zwischen den Schneidvorrichtungen des ersten Satzes von Schneidvorrichtungen und des zweiten Satzes von Schneidvorrichtungen bereitgestellt wird, und wobei der Abstandshalter (40) darin definierte Öffnungen zum Unterbringen der Stifte (16) aufweist.

4. Reinigungsvorrichtung nach Anspruch 3, **dadurch gekennzeichnet, dass** der zweite Satz von Schneidvorrichtungen (12) aus größeren oder kleineren Schneidvorrichtungen als der erste Satz von Schneidvorrichtungen (11) besteht.

5. Reinigungsvorrichtung nach Anspruch 3, **dadurch gekennzeichnet, dass** die Reinigungsvorrichtung mehrere Sätze von Schneidvorrichtungen umfasst, die Abstandshalter aufweisen, die zwischen jedem Satz von Schneidvorrichtungen bereitgestellt werden, wobei die Größe der Schneidvorrichtungen zwischen den Sätzen von Schneidvorrichtungen gleich bleibt oder zwischen jedem folgenden Satz von Schneidvorrichtungen in einer Richtung von dem vorderen Körperelement zu dem hinteren Körperelement zunimmt.

6. Reinigungsvorrichtung nach Anspruch 1, **dadurch gekennzeichnet, dass** die Reinigungsvorrichtung eine Zentriervorrichtung zum Zentrieren der Reinigungsvorrichtung in einem Rohr umfasst.

7. Reinigungsvorrichtung nach Anspruch 6, **dadurch gekennzeichnet, dass** die Zentriervorrichtung einen Körper umfasst, der steife Bürsten aufweist, die sich radial von dem Körper aus erstrecken.

8. Reinigungsvorrichtung nach Anspruch 1, **dadurch gekennzeichnet, dass** die schwenkbar verbundenen Schneidvorrichtungen angeordnet sind, um den Durchmesser der Reinigungsvorrichtung zwischen den Endpositionen einer Schwenkbewegung der schwenkbar verbundenen Schneidvorrichtungen um mindestens 25 % zu ändern.

## Revendications

1. Dispositif de nettoyage pour nettoyer un tuyau depuis l'intérieur, le dispositif de nettoyage comprenant :
un élément de corps avant (30) ayant des ouvertures (31) définies dans celui-ci pour recevoir une première extrémité de broches (16) ;
un élément de corps arrière (50) ayant des ouvertures (51) définies dans celui-ci pour recevoir une seconde extrémité de broches (16), et ayant un connecteur (53, 54) pour relier un arbre d'entraînement et étant apte à tourner autour d'un axe de rotation avec l'arbre d'entraînement ;
des broches (16) s'étendant du premier élément de corps (30) au second élément de corps (50) dans une direction parallèle à l'axe de rotation ;
un premier ensemble d'éléments de coupe (11) ayant des bords de coupe prévus sur les éléments de coupe et chaque élément de coupe ayant une ouverture définie dans celui-ci et s'étendant à travers l'élément de coupe pour recevoir une broche (16) entre les premières extrémités et les secondes extrémités,
lesdits éléments de coupe sont rigides et reliés de manière pivotante auxdites broches (16), permettant auxdits éléments de coupe de pivoter dans un plan parallèle à l'axe de rotation,
**caractérisé par le fait que** les éléments de coupe (11) ont une forme incurvée avec une surface convexe et une surface concave opposée tournée vers le corps (30, 50) du dispositif de nettoyage, les bords de coupe étant prévus sur la surface convexe et lesdits bords de coupe étant parallèles à l'axe de rotation du dispositif de nettoyage.

2. Dispositif de nettoyage selon la revendication 1, **caractérisé par le fait que** les ouvertures (31) définies dans l'élément de corps avant s'étendent à travers l'élément de corps avant (30), permettant un retrait des broches (16) et des éléments de coupe (11), et le dispositif de nettoyage comprend une plaque avant amovible (20) fixée à l'élément de corps avant (30), recouvrant au moins partiellement lesdites ouvertures (31) pour fixer les broches (16).

3. Dispositif de nettoyage selon la revendication 1, **caractérisé par le fait que** le dispositif de nettoyage comprend un second ensemble d'éléments de coupe (12) et une entretoise (40) prévue entre des éléments de coupe du premier ensemble d'éléments de coupe et du second ensemble d'éléments de coupe, et l'entretoise (40) ayant des ouvertures définies dans celle-ci pour recevoir les broches (16).

4. Dispositif de nettoyage selon la revendication 3, **caractérisé par le fait que** le second ensemble d'éléments de coupe (12) est constitué par des éléments de coupe plus grands ou plus petits que le premier ensemble d'éléments de coupe (11).

5. Dispositif de nettoyage selon la revendication 3, **caractérisé par le fait que** le dispositif de nettoyage comprend de multiples ensembles d'éléments de coupe ayant des entretoises prévues entre chaque ensemble d'éléments de coupe, la taille des éléments de coupe entre les ensembles d'éléments de coupe restant la même ou augmentant entre chaque ensemble suivant d'éléments de coupe dans une direction allant de l'élément de corps avant vers l'élément de corps arrière.

6. Dispositif de nettoyage de la revendication 1, **caractérisé par le fait que** le dispositif de nettoyage comprend un dispositif de centrage pour centrer le dispositif de nettoyage à l'intérieur d'un tuyau.

7. Dispositif de nettoyage selon la revendication 6, **caractérisé par le fait que** le dispositif de centrage comprend un corps ayant des brosses rigides s'étendant radialement à partir du corps.

8. Dispositif de nettoyage selon la revendication 1, **caractérisé par le fait que** les éléments de coupe reliés de manière pivotante sont agencés pour changer un diamètre du dispositif de nettoyage d'au moins 25% entre des positions extrêmes d'un mouvement de pivotement des éléments de coupe reliés de manière pivotante.
